# EUROPEAN PATENT APPLICATION

(11) **EP 1 736 650 A2**
(43) Date of publication of application: **27.12.2006**
(21) Application number: 06252025.9
(22) Date of filing: 12.04.2006
(51) Int. Cl.: F02C 7/14

(54) **Methods and apparatus for operating gas turbine engines**

(30) Priority: 22.06.2005 US 158738
(71) Applicant: GENERAL ELECTRIC COMPANY, Schenectady, New York 12345 (US)
(72) Inventor: Holloway, Gary Mac, Cincinnati, Ohio 45241 (US); Demel, Herbert Franz, West Chester, Ohio 45069 (US)
(74) Representative: Bedford, Grant Richard

(57) **Abstract**

A method for assembling a gas turbine engine (10) includes coupling at least one heat pipe (110) to the gas turbine engine such that a first closed end (114) of the at least one heat pipe is coupled in thermal communication with the lubrication fluid, and extending an opposite second closed end (113) of the at least one heat pipe radially outward through the outer casing (13) such that the heat pipe second end is positioned in thermal communication with ambient air (14) or other heat sink media (112), and such that fluid flows from the first end to the second end of the at least one heat pipe, and in an opposite flow direction from the second end to the first end of the at least one heat pipe through the at least one heat pipe to facilitate reducing an operating temperature of the lubrication fluid.

## Description

This invention relates generally to gas turbine engines, and more particularly, to methods and apparatus for operating gas turbine engines.

Gas turbine engines typically include low and high pressure compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as producing useful work to propel an aircraft in flight or to power a load, such as an electrical generator.

During engine operation, a lubrication system is utilized to facilitate lubricating components within the gas turbine engine. For example, the lubrication system is configured to channel lubrication fluid to various bearing assemblies within the gas turbine engine. During operation, heat is transmitted to the lubrication fluid from two sources: from heat generated by sliding and rolling friction by components like bearings and seals within a sump and from heat-conduction through the sump wall due to hot air surrounding the sump enclosure.

Additionally, at least one known gas turbine engine utilizes a heat exchanger that is configured to increase an operational temperature of the fuel prior to channeling the fuel to the gas turbine engine. Accordingly, to reduce the operating temperature of the lubrication fluid, the lubrication fluid is channeled through the fuel heat exchanger to facilitate increasing an operating temperature of the fuel and also to facilitate reducing an operating temperature of the lubrication fluid.

However, to utilize a fuel heat exchanger to decrease an operating temperature of the lubrication fluid, the capacity of at least some known fuel heat exchangers is increased but can also be limited due to engine available fuel flow. To facilitate compensating the additional capacity required to reduce the operating temperature of the lubrication fluid. Accordingly, reducing the operating temperature of the lubrication fluid utilizing a known heat exchanger may increase the cost of the gas turbine engine assembly.

In one aspect, a method for assembling a turbine engine is provided. The method includes coupling at least one heat pipe to the gas turbine engine such that a first closed end of the at least one heat pipe is coupled in thermal communication with the lubrication fluid, and extending an opposite second closed end of the at least one heat pipe radially outward through the outer casing such that the heat pipe second end is positioned in thermal communication with a heat sink such as: ambient air which is cooler than the lubrication fluid, or another on-board cooling air source from a turbo-cooler, or large heat sink such as the fuel tank and such that fluid flows from the first end to the second end of the at least one heat pipe, and in an opposite flow direction from the second end to the first end of the at least one heat pipe through the at least one heat pipe to facilitate reducing an operating temperature of the lubrication fluid.

In another aspect, a lubrication cooling system for a gas turbine engine is provided. The lubrication cooling system includes at least one heat pipe coupled to the gas turbine engine such that a first closed end of the at least one heat pipe is coupled in thermal communication with the lubrication fluid and an opposite second closed end of the at least one heat pipe extends radially outward through the outer casing such that the heat pipe second end is positioned in thermal communication with a heat sink such as: ambient air which is cooler than the lubrication fluid, or another on-board cooling air source from a turbo-cooler, or large heat sink such as a fuel tank , and such that fluid flows from the first end to the second end of the at least one heat pipe, and in an opposite flow direction from the second end to the first end of the at least one heat pipe to facilitate reducing an operating temperature of the lubrication fluid.

In a further aspect, a gas turbine engine is provided. The gas turbine engine includes a compressor, a combustor, a turbine, an outer casing extending circumferentially around the compressor, the combustor, and the turbine, a lubrication system configured to channel lubrication fluid to at least one of the engine rotor support systems (sumps), and a lubrication cooling system to facilitate reducing an operating temperature of the lubrication fluid. The lubrication cooling system includes at least one heat pipe coupled to the gas turbine engine such that a first closed end of the at least one heat pipe is coupled in thermal communication with the lubrication fluid anywhere within the lubrication circuit and an opposite second closed end of the at least one heat pipe extends radially outward through the outer casing such that the heat pipe second end is in positioned in thermal communication with the heat sink, and such that fluid flows from the first end to the second end of the at least one heat pipe, and in an opposite flow direction from the second end to the first end of the at least one heat pipe through the at least one heat pipe to facilitate reducing an operating temperature of the lubrication fluid.

Various aspects and embodiments will now be described in connection with the accompanying drawings, in which:
Figure 1 is schematic illustration of an exemplary gas turbine engine;
Figure 2 is a schematic illustration of an exemplary lubrication cooling system that may be used with the gas turbine engine shown in Figure 1;
Figure 3 is an enlarged illustration of the lubrication cooling system shown in Figure 2 and taken along area 3;
Figure 4 is a schematic illustration of an exemplary lubrication cooling system that may be used with the gas turbine engine shown in Figure 1; and
Figure 5 is an enlarged illustration of the lubrication cooling system shown in Figure 4 and taken along area 5.

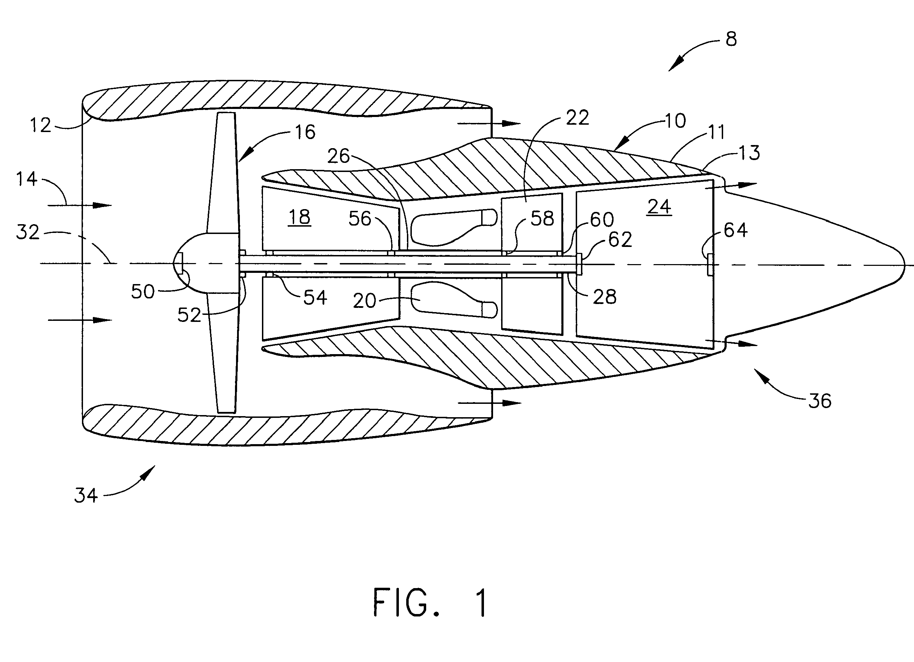

Figure 1 is a schematic illustration of an exemplary gas turbine engine assembly 8 that includes a high bypass, turbofan gas turbine engine 10 having in serial flow communication an inlet 12 for receiving ambient air 14, a fan 16, a compressor 18, a combustor 20, a high pressure turbine 22, and a low pressure turbine 24. In the exemplary embodiment, compressor 18, combustor 20, and high pressure turbine 22 are referred to as a core gas turbine engine 11. Accordingly, core gas turbine engine 11 includes and an outer casing 13 that extends circumferentially around compressor 18, combustor 20, and high pressure turbine 22. High pressure turbine 22 is coupled to compressor 18 using a first shaft 26, and low pressure turbine 24 is coupled to fan 16 using a second shaft 28. Gas turbine engine 10 has an axis of symmetry 32 extending from an upstream side 34 of gas turbine engine 10 aft to a downstream side 36 of gas turbine engine 10.

In the exemplary embodiment, gas turbine engine 10 also includes a first fan bearing assembly 50, a second fan bearing assembly 52, a first compressor bearing assembly 54, a second compressor bearing assembly 56, a first high pressure turbine bearing assembly 58, a second high pressure turbine bearing assembly 60, a first low-pressure turbine bearing assembly 62, and a second low-pressure turbine bearing assembly 64, that are each configured to provide at least one of axial and/or rotational support to the respective components.

During operation, airflow (P3) enters gas turbine engine 10 through inlet 12 and is compressed utilizing compressor 18. The compressed air is channeled downstream at an increased pressure and temperature to combustor 20. Fuel is introduced into combustor 20 wherein the air (PS3) and fuel are mixed and ignited within combustor 20 to generate hot combustion gases. Specifically, pressurized air from compressor 18 is mixed with fuel in combustor 20 and ignited thereby generating combustion gases. Such combustion gases are then utilized to drive high pressure turbine 22 which drives compressor 18 and to drive low pressure turbine 24 which drives fan 16.

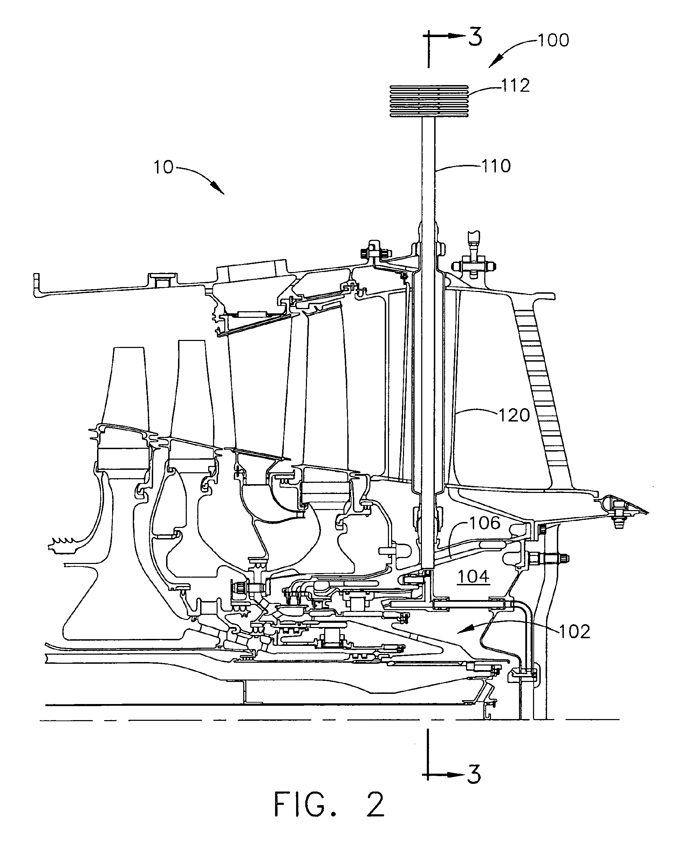

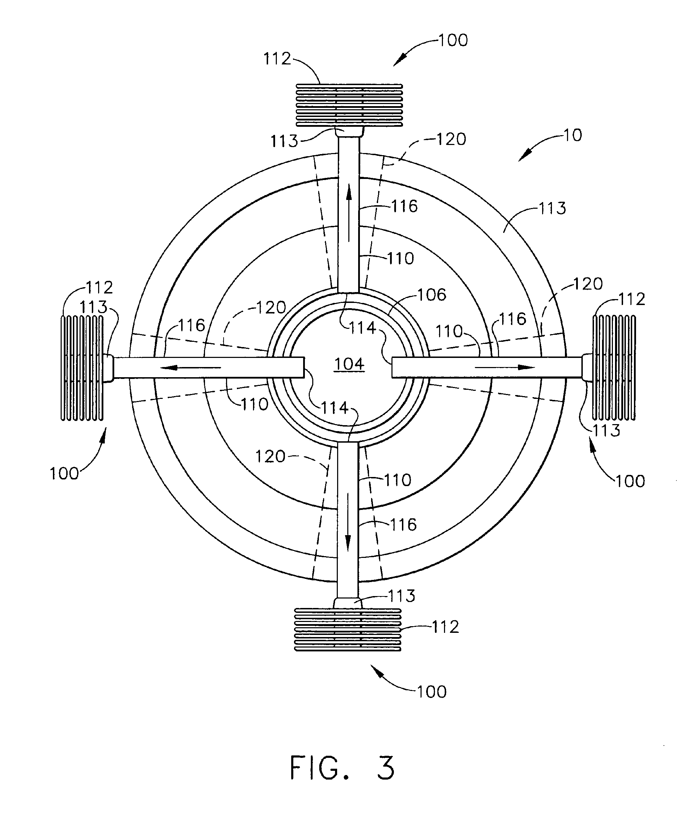

Figure 2 is a schematic illustration of a portion of gas turbine engine 10 that includes an exemplary lubrication cooling system 100. Figure 3 is a cross-sectional view of the portion of gas turbine engine 10 (shown in Figure 2). Specifically, and in the exemplary embodiment, lubrication cooling system 100 facilitates reducing an operating temperature of at least a portion of the lubrication fluid utilized within gas turbine engine 10 to lubricate a bearing assembly such as, but not limited to, at least one of bearing assemblies 50, 52, 54, 56, 58, 60, 62, and 64, shown in Figure 1. More specifically, although the exemplary embodiment is described with respect to a single exemplary bearing assembly that is coupled within a single exemplary lube oii sump, it should be realized that lubrication cooling system 100 can be utilized to reduce the operating temperature of plurality of bearing assemblies coupled within a plurality of respective sumps within gas turbine engine 10. Moreover, lubrication cooling system 100 may be utilized to reduce the operational temperature of any fluid utilized within a variety of mechanical system such as, but not limited to, automobiles, trains, power generating sets, etc.

Accordingly, and in the exemplary embodiment, gas turbine engine 10 includes at least one exemplary bearing assembly 102 that is positioned within a lubrication sump 104, that is circumscribed by a sump wall 106. More specifically, sump wall 106 forms a cavity, i.e. sump 104, such that lubrication fluid channeled to bearing assembly 102 is at least partially contained within sump 104.

In the exemplary embodiment, lubrication cooling system 100 includes a heat pipe 110 and a heat dissipation device 112 that is coupled to heat pipe 110. Heat pipe 110 functions as though it has an effective thermal conductivity that is several orders of magnitude higher than that of copper. More specifically, heat pipe 110 uses a liquid that evaporates by absorbing the heat from a hot end. The vapor generated then travels through the center of heat pipe 110, or through a channel formed within heat pipe 110, and condenses at the cold end of heat pipe 110, thereby transferring heat to the cold end. A wick that extends from one end of the heat pipe to the other transports the condensed liquid back to the hot end by capillary action, thereby completing the circuit. In the exemplary embodiment, gas turbine engine 10 includes a single lubrication cooling system 100. In an alternative embodiment, gas turbine engine 10 includes a plurality of lubrication cooling systems 100, wherein each respective lubrication cooling system 100 is configured to reduce an operating temperature of the lubrication fluid within a respective lubrication sump. In the exemplary embodiment, lubrication cooling system 100 extends radially outward through outer casing 13 such that at least a portion of heat pipe 110 is in positioned radially outer from outer casing 13 and in thermal communication with ambient air surrounding gas turbine engine 10 or in thermal communication with another heat sink of cooled cooling air such as from a turbo cooler or fuel tank.

In the exemplary embodiment, heat pipe 110 includes an upstream end 113, a downstream end 114, and a body 116 extending there between. Body 116 is hollow and includes a cavity (not shown) defined therein by body 116. Body 116 is lined with a capillary structure or wick that is saturated with a volatile or working fluid. In one embodiment, downstream end 114 is thermally coupled to sump wall 106. In another embodiment, downstream end 114 extends through sump wall 106 and at least partially into sump 104. In one embodiment, at least a portion of heat pipe 110 is positioned within a frame strut 120, for example, the a turbine mid-frame strut or a turbine rear-frame strut. In an alternative embodiment, heat pipe 110 is coupled to a stationary component within gas turbine engine to facilitate securing heat pipe 110 in a relatively fixed position.

In the exemplary embodiment, heat pipe 110 combines two properties of physics: vapor heat transfer and capillary action. More specifically, when heat pipe downstream end 114 is exposed to a heat source and is heated, the working fluid within each heat pipe 110 evaporates from liquid to vapor. The vapor flows through body 116 towards heat pipe upstream end 113 wherein vapor heat energy is removed through heat dissipation device 112. More specifically, heat dissipation device 112 functions as a heat sink to facilitate heat transfer to from heat pipe 110 to the ambient air surrounding gas turbine engine 10, or another heat sink media. For example, in the exemplary embodiment, heat dissipation device 112 includes a plurality of cooling fins such that heat generated by upstream end 113 is dissipated through the plurality of cooling fins to atmosphere, or another heat sink media. Accordingly, the temperature of the lubrication fluid within gas turbine engine is facilitated to be reduced.

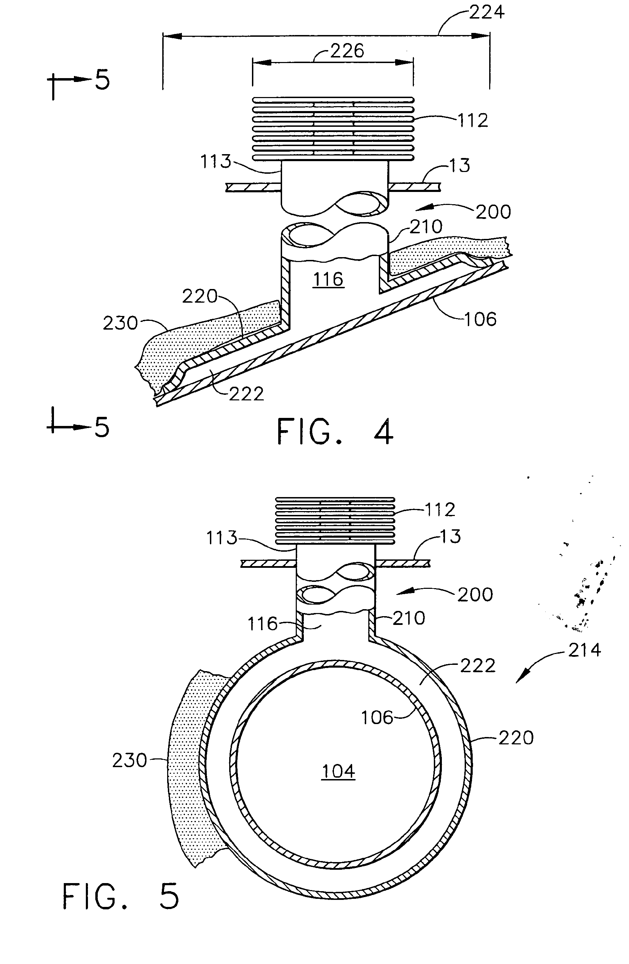

Figure 4 is a side view of another exemplary lubrication cooling system 200 that can be utilized to reduce the operating temperature of a lubrication fluid within gas turbine engine 10. Figure 5 is an end view of lubrication cooling system 200. Specifically, and in the exemplary embodiment, lubrication cooling system 200 facilitates reducing an operating temperature of at least a portion of the lubrication fluid utilized within gas turbine engine 10 to lubricate a bearing assembly such as, but not limited to, at least one of bearing assemblies 50, 52, 54, 56, 58, 60, 62, and 64, shown in Figure 1. More specifically, although the exemplary embodiment is described with respect to a single exemplary bearing assembly that is coupled within a single exemplary lube oil sump, it should be realized that lubrication cooling system 200 can be utilized to reduce the operating temperature of plurality of bearing assemblies coupled within a plurality of respective sumps within gas turbine engine 10. Moreover, lubrication cooling system 200 may be utilized to reduce the operational temperature of any fluid utilized within a variety of mechanical system such as, but not limited to, automobiles, trains, power generating sets, etc.

Accordingly, and in the exemplary embodiment, gas turbine engine 10 includes at least one exemplary bearing assembly 102 that is positioned within a lubrication sump 104, that is circumscribed by a sump wall 106. More specifically, sump wall 106 forms a cavity, i.e. sump 104, such that lubrication fluid channeled to bearing assembly 102 is at least partially contained within sump 104.

In the exemplary embodiment, lubrication cooling system 200 includes a heat pipe 210 and heat dissipation device 112 that is coupled to heat pipe 210. Heat pipe 210 functions as though it has an effective thermal conductivity that is several orders of magnitude higher than that of copper. More specifically, heat pipe 210 uses a liquid that evaporates by absorbing the heat from a hot end. The vapor generated then travels through the center of heat pipe 210, or through a channel formed within heat pipe 210, and condenses at the cold end of heat pipe 210, thereby transferring heat to the cold end. A wick that extends from one end of the heat pipe to the other transports the condensed liquid back to the hot end by capillary action, thereby completing the circuit. In the exemplary embodiment, gas turbine engine 10 includes a single lubrication cooling system 200. In an alternative embodiment, gas turbine engine 10 includes a plurality of lubrication cooling systems 200, wherein each respective lubrication cooling system 200 is configured to reduce an operating temperature of the lubrication fluid within a respective lubrication sump. In the exemplary embodiment, lubrication cooling system 200 extends radially outward through outer casing 13 such that at least a portion of heat pipe 210 is in positioned radially outer from outer casing 13 and in thermal communication with ambient air surrounding gas turbine engine 10 or other heat sink media such as cooled cooling air from turbo cooler or fuel tank.

In the exemplary embodiment, heat pipe 210 includes upstream end 113, a downstream end 214, and body 116 extending there between. Body 116 is hollow and includes a cavity (not shown) defined therein by body 116. Body 116 is lined with a capillary structure or wick that is saturated with a volatile or working fluid. In the exemplary embodiment, downstream end 214 includes a substantially U-shaped portion 220 that is configured to circumscribe sump wall 106 such that a cavity 222 is defined between U-shaped portion 220, sump wall 106, and body 116. In the exemplary embodiment, U-shaped portion 220 has a width 224 that is larger than a width 226 of body 116. In the exemplary embodiment, U-shaped portion 220 facilitates increasing a surface area to which heat pipe 210 is thermally coupled. More specifically, the fluid within heat pipe 210 is channeled through cavity 222 to facilitate reducing an operating temperature of the lubrication fluid within sump 104. Because heat pipe 210 includes U-shaped portion 220, or a multiplicity of channels, a surface area between heat pipe 210 and sump wall 106 is substantially increased, thus the thermal conductivity between the lubrication fluid within sump 104 and the fluid within heat pipe 10 is also increased. In the exemplary embodiment, an insulating layer 230 is coupled to an exterior surface of U-shaped portion 220 to facilitate reducing thermal interaction between lubrication sump 104 and other components of gas turbine engine 10. More specifically, insulating layer 230 facilitates insulating sump 104 from environmental conditions surrounding the sump thus reducing the cooling load on heat pipe 210.

In the exemplary embodiment, heat pipe 210 combines two properties of physics: vapor heat transfer and capillary action. More specifically, when heat pipe downstream end 114 is exposed to a heat source and is heated, the working fluid within each heat pipe cavity 222 evaporates from liquid to vapor. The vapor flows from cavity 222, through body 116, towards heat pipe upstream end 113 wherein vapor heat energy is removed through heat dissipation device 112. More specifically, heat dissipation device 112 functions as a heat sink to facilitate heat transfer to from heat pipe 210 to the ambient air surrounding gas turbine engine 10. For example, in the exemplary embodiment, heat dissipation device 112 includes a plurality of cooling fins such that heat generated by upstream end 113 is dissipated through the plurality of cooling fins to atmosphere or other media. Accordingly, the temperature of the lubrication fluid within gas turbine engine is facilitated to be reduced.

During engine operation, lubrication cooling systems 200 operates similarly to lubrication cooling systems 100 to facilitate reducing the temperature of a lubrication fluid utilized within engine 10.

The above-described lubrication cooling system is cost-effective and highly reliable in facilitating the reducing the operating temperature of a lubrication fluid utilized to lubricate various components within a gas turbine engine. More specifically, the heat pipe enables heat to be transferred from selected heat sources and dissipated into the atmosphere whenever the engine is operating, thus reducing the heat load on an existing cooling system, or alternatively eliminating the use of an external cooling system. For example, although the heat pipe is described herein with respect to a gas turbine engine sump, it should be realize that the heat pipe can be utilized in a variety of different locations with the gas turbine engine to facilitate reducing the lube oil temperature within gas turbine engine 10 by placing the hot end of the heat pipe anywhere within the lubrication system circuit including placing it into the lubrication reservoir.. Moreover, no external initiation or modulation of heat flux is required with the above-described lubrication cooling system.

Exemplary embodiments of lubrication cooling systems are described above in detail. The lubrication cooling systems are not limited to the specific embodiments described herein, but rather, components of each system may be utilized independently and separately from other components described herein. For example, each lubrication cooling system component can also be used in combination with other lubrication cooling system components and with other gas turbine engines, and/or steam turbines. While the invention has been described in terms of various specific embodiments, those skilled in the art will recognize that the invention can be practiced with modification within the spirit and scope of the claims.

**PARTS LIST**

| | |
|---|---|
| 3 | Area |
| 5 | Area |
| 8 | Gas turbine engine assembly |
| 10 | Turbofan gas turbine engine |
| 11 | Core gas turbine engine |
| 12 | Inlet |
| 13 | Outer casing |
| 14 | Ambient air |
| 16 | Fan |
| 18 | Compressor |
| 20 | Combustor |
| 22 | High pressure turbine |
| 24 | Low pressure turbine |
| 26 | First shaft |
| 28 | Second shaft |
| 32 | Axis of symmetry |
| 34 | Upstream side |
| 36 | Downstream side |
| 50 | First fan bearing assembly |
| 52 | Second fan bearing assembly |
| 54 | First compressor bearing assembly |
| 56 | Second compressor bearing assembly |
| 58 | First high pressure turbine bearing assembly |
| 60 | Second high pressure turbine bearing assembly |
| 62 | First low pressure turbine bearing assembly |
| 64 | Second low pressure turbine bearing assembly |
| 100 | Lubrication cooling system |
| 102 | Bearing assembly |
| 104 | Lubrication sump |
| 106 | Sump wall |
| 110 | Heat pipe |
| 112 | Heat dissipation device |
| 113 | Heat pipe upstream end |
| 114 | Heat pipe downstream end |
| 116 | Body |
| 120 | Frame strut |
| 200 | Lubrication cooling system |
| 210 | Heat pipe |
| 214 | Downstream end |
| 220 | U-shaped portion |
| 222 | Cavity |
| 224 | Width |
| 226 | Width |
| 230 | Insulating layer |

## Claims

1. A lubrication cooling system (100) for a gas turbine engine (10), said lubrication cooling system comprising:
at least one heat pipe (110) coupled to the gas turbine engine such that a first closed end (114) of said at least one heat pipe is coupled in thermal communication with the lubrication fluid and an opposite second closed end (113) of the at least one heat pipe extends radially outward through the outer casing (13) such that said heat pipe second end is in positioned in thermal communication with ambient air (14), and such that fluid flows from said first end to said second end of said at least one heat pipe, and in an opposite flow direction from said second end to said first end of said at least one heat pipe through said at least one heat pipe to facilitate reducing an operating temperature of the lubrication fluid.

2. A lubrication cooling system (100) in accordance with Claim 1 wherein said heat pipe (110) is inserted at least partially through an engine frame strut (120) such that said heat pipe first end (114) is in thermal communication with the lubrication fluid.

3. A lubrication cooling system (100) in accordance with Claim 1or Claim 2 wherein said heat pipe first end (114) is inserted through the outer casing (13) such that said heat pipe first end is positioned at least partially within the gas turbine engine lubrication sump (104).

4. A lubrication cooling system (100) in accordance with any preceding Claim wherein said heat pipe first end (114) circumscribes a lubrication sump (104) to facilitate reducing an operational temperature of the lubrication fluid within the lubrication sump.

5. A lubrication cooling system (100) in accordance with Claim 4 wherein said heat pipe first end (114) is coupled to the gas turbine engine (10) such that a fluid within said heat pipe (110) is channeled around an exterior surface of the lubrication sump (104).

6. A lubrication cooling system (100) in accordance with any preceding Claim wherein said heat pipe (110) is inserted through the outer casing (13) such that said heat pipe first end (114) is coupled in thermal communication to a lubrication sump wall (106).

7. A lubrication cooling system (100) in accordance with any preceding Claim further comprising a heat diffuser (112) coupled to said heat pipe second end (113) to facilitate reducing a temperature of the fluid within said heat pipe (110).

8. A gas turbine engine (10) comprising:
a compressor (18);
a combustor (20);
a turbine (22);
an outer casing (13) extending circumferentially around said compressor, said combustor, and said turbine;
a lubrication system configured to channel lubrication fluid to at least one of said compressor and said turbine; and
a lubrication cooling system (100) to facilitate reducing an operating temperature of the lubrication fluid, said lubrication cooling system comprising:
at least one heat pipe (110) coupled to said gas turbine engine such that a first closed end (114) of said at least one heat pipe is coupled in thermal communication with the lubrication fluid and an opposite second closed end (113) of the at least one heat pipe extends radially outward through the outer casing such that said heat pipe second end is in positioned in thermal communication with ambient air (14), and such that fluid flows from said first end to said second end of said at least one heat pipe, and in an opposite flow direction from said second end to said first end of said at least one heat pipe through said at least one heat pipe to facilitate reducing an operating temperature of the lubrication fluid.

9. A gas turbine engine (10) in accordance with Claim 8 wherein said heat pipe (110) is inserted at least partially through an engine frame strut (120) such that said heat pipe first end (114) is in thermal communication with the lubrication fluid.

10. A gas turbine engine (10) in accordance with Claim 8 or Claim 9 wherein said heat pipe first end (114) is inserted through the outer casing (13) such that said heat pipe first end is positioned at least partially within a lubrication sump (104).
